# EUROPEAN PATENT APPLICATION

(11) **EP 4 088 576 A1**
(43) Date of publication of application: **16.11.2022**
(21) Application number: 21173948.7
(22) Date of filing: 14.05.2021
(51) Int. Cl.: A01N 43/16, A01P 5/00

(54) **METHOD OF PATHOGEN CONTROL**

(71) Applicant: Rheinische Friedrich-Wilhelms-Universität Bonn, 53113 Bonn (DE); RWTH Aachen University, 52062 Aachen (DE)
(72) Inventor: Bredenbruch, Sandra, 53129 Bonn (DE); Schleker, Sylvia, 52353 Düren (DE); Grundler Florian, 53619 Rheinbreitbach (DE); Müller, Conrad, 52074 Aachen (DE); Tiso, Till, 51065 Käln (DE); Blank, Lars M., 44227 Dortmund (DE)
(74) Representative: Altmann Stößel Dick Patentanwälte PartG mbB

(57) **Abstract**

The present invention relates to methods for pathogen control, comprising providing a composition comprising at least one di-rhamnolipid and contacting a plant with an effective amount of said composition such that the pathogen is controlled. In an embodiment, the di-rhamnolipid is a C10-C12 di-rhamnolipid, or a C10-C12:1 di-rhamnolipid, or a combination thereof, wherein the amount of the at least one di-rhamnolipid present in the composition is at least 10% by weight, based on the total weight of all rhamnolipids present in the composition. The present invention further pertains to a plant seed coated with a composition comprising at least one di-rhamnolipid.

## Description

The present invention relates to methods for pathogen control, comprising providing a composition comprising at least one di-rhamnolipid and contacting a plant with an effective amount of said composition such that the pathogen is controlled. In an embodiment, the di-rhamnolipid is a C10-C12 di-rhamnolipid, or a C10-C12:1 di-rhamnolipid, or a combination thereof, wherein the amount of the at least one di-rhamnolipid present in the composition is at least 10% by weight, based on the total weight of all rhamnolipids present in the composition. The present invention further pertains to a plant seed coated with a composition comprising at least one di-rhamnolipid.

Pest control often relies on the use of pesticides in order to minimize yield losses and to maintain yield quality. However, synthetic products are more and more discredited for their broad range toxicity and persistence in the environment as they often endanger non-target species, contribute to unbalance the ecosystem, and jeopardize human health. Their hazardous nature is a key motive to underpin the need for a shift in the future development of agrochemicals towards a stronger focus on aspects like environmental and toxicological profiles [1].

Phytoparasites like PPNs are a striking example for the current insufficiency of synthetic agents in crop protection responsible for annual agricultural losses worth $125-157 billion [2-4]. There is no agricultural crop devoid of nematode parasitism, though with varying damage intensity [5]. PPN control based on nematicides poses a major challenge for different reasons: the surface of nematodes is impermeable to most organic substances, oral uptake is restricted to feeding on plants, and most PPN species exclusively live underground. To manage these difficulties, common nematicides are designed to be mobile in the soil and to be highly toxic with very low LD50 values. As a consequence, synthetic nematicidal agents are often associated with high environmental risks including groundwater contamination, broad spectrum activity and depletion of soil flora and fauna. Therefore, synthetic nematicides are banned in many countries on the one hand causing control of PPNs to be extremely challenging as means are then restricted to cultural practices and a limited cultivar choice [2]. On the other hand, environmentally hazardous synthetic nematicides are still on the market in parts of the world. Environmentally more friendly approaches must be a priority requirement in the course of sustainable agriculture, and in particular in the context of PPN control. One possibility is to explore naturally occurring resources. With few natural antagonists of PPNs already on the market, field application of biocontrol organisms is often accompanied by an inconsistent performance due to the complex interplay of soil communities [6]. The risk of establishment failures of biocontrol organisms can be avoided by instead referring to purified microbial metabolites of which several can be linked to nematicidal activity or induced resistance in plants active against PPNs [2,7-9].

RLs, surface-active secondary metabolites of microbial origin, increasingly gained attention for their potential to control economically important pests [10-19]. In line with most biological substances, RLs excel in their ecological features combining low toxicity with biodegradability [20,21]. As amphiphilic molecules they consist of a hydrophilic and a hydrophobic moiety: one or two L-rhamnose residues glycosidically linked to one or two 3 -hydroxy fatty acid chains of variable length. In particular, species of the genera *Pseudomonas* and *Burkholderia* produce these secondary metabolites with *P. aeruginosa* being the most prominent one. RLs are involved in mechanisms that control essential aspects of microbial life including bacterial motility, biofilm production, food intake and antimicrobial activity [22].

In order to define their capabilities to control PPNs, RLs were integrated in host-parasite systems with *B. vulgaris* L. and the beet cyst nematode *H. schachtii.* As a cyst nematode, this species is among the economically most important PPNs, furthermore, *H. schachtii* is an eminent model nematode to investigate parasitic interactions with plants [23,24]. Here, we show that the plant protection effect is reproducible with commercial sugar beet cultivars under sterile agar-based and non-sterile soil-based conditions. In order to maintain the beneficial impact of RLs, it is of high importance not only to define their structural nature, but to work with relatively low doses. Lowdose RLs were found to be most effective to control *H. schachtii* making this secondary metabolite an excellent biopesticide of great efficiency.

### Summary of the invention

Thus, the present invention relates a method for pathogen control, comprising
providing a composition comprising at least one di-rhamnolipid, wherein the di-rhamnolipid is a C10-C12 di-rhamnolipid, or a C10-C12:1 di-rhamnolipid, or a combination thereof, wherein the amount of the at least one di-rhamnolipid present in the composition is at least 10% by weight, based on the total weight of all rhamnolipids present in the composition, and
contacting a plant with an effective amount of said composition such that the pathogen is controlled.

Further, the present invention also relates to a method for pathogen control, comprising providing a composition comprising a mono-rhamnolipid and di-rhamnolipid mixture, wherein the mono-rhamnolipid and di-rhamnolipid mixture has a weight ratio of di-rhamnolipids to mono-rhamnolipids of greater than 90:10, such as of greater than 95:5 or greater than 97:3, and contacting a plant with an effective amount of said composition such that the pathogen is controlled.

Further, the present invention relates to a plant seed coated with a composition comprising at least one di-rhamnolipid, wherein the di-rhamnolipid is a C10-C12 di-rhamnolipid, or a C10-C12:1 di-rhamnolipid, or a combination thereof, wherein the amount of the at least one di-rhamnolipid present in the composition is at least 10% by weight, based on the total weight of all rhamnolipids present in the composition.

Further, the present invention relates to a plant seed coated with a composition comprising a mono-rhamnolipid and di-rhamnolipid mixture, wherein the mono-rhamnolipid and di-rhamnolipid mixture has a weight ratio of di-rhamnolipids to mono-rhamnolipids of greater than 90:10, such as of greater than 95:5 or greater than 97:3.

In the following the composition to be applied in the method of the present invention will be further defined. The definitions and explanations apply *mutatis mutandis* to the composition used for coating the plant seed of the present invention.

According to a first preferred embodiment of the invention, the composition provided in the method according to the invention and the composition of the plant seed coat, comprising at least one di-rhamnolipid, wherein the di-rhamnolipid is a C10-C12 di-rhamnolipid, or a C10-C12:1 di-rhamnolipid, or a combination thereof, wherein the amount of the at least one di-rhamnolipid present in the composition is at least 10% by weight, based on the total weight of all rhamnolipids present in the composition

Rhamnolipids are a class of glycolipid. They are constructed of rhamnose combined with beta-hydroxy fatty acids. The hydroxy group of the fatty acid is connected to the rhamnose. The amphiphilic part of rhamnolipids is formed by the rhamnose and the hydrophobic moiety the beta-hydroxy-fatty acid. Overall structural differences result from variations in the sugar and in the hydrophobic moiety. The number of either the sugar residues or the beta-hydroxy-fatty acids is usually either one or two, but up to three P-hydroxy-fatty acids were reported. On the other hand, the number of carbon atoms in the beta-hydroxy-fatty acids can vary widely, such as between 6 and 24.

Rhamnolipids may be produced by strains of the bacteria *Pseudomonas aeruginosa.* There are two major groups of rhamnolipids; mono-rhamnolipids and di-rhamnolipids.

Mono-rhamnolipids have a single rhamnose sugar ring. Preferred mono-rhamnolipids according to the invention comprise beta-hydroxy-fatty acid with of from 6 to 18 carbon atoms, wherein if more than one beta-hydroxy-fatty acid is present, both may have the same number of carbon atoms or may differ from each other.

The following preferred mono-rhamnolipids shall be mentioned by way of example: C6-C6-mono-rhamnolipid, C6-C7-mono-rhamnolipid, C6-C8-mono-rhamnolipid, C6-C9-mono-rhamnolipid, C6-C10-mono-rhamnolipid, C6-C11-mono-rhamnolipid, C6-C12-mono-rhamnolipid, C6-C13-mono-rhamnolipid, C6-C14-mono-rhamnolipid, C6-C15-mono-rhamnolipid, C6-C16-mono-rhamnolipid, C6-C17-mono-rhamnolipid, C6-C18-mono-rhamnolipid, C7-C6-mono-rhamnolipid, C7-C7-mono-rhamnolipid, C7-C8-mono-rhamnolipid, C7-C9-mono-rhamnolipid, C7-C10-mono-rhamnolipid, C7-C11-mono-rhamnolipid, C7-C12-mono-rhamnolipid, C7-C13-mono-rhamnolipid, C7-C14-mono-rhamnolipid, C7-C15-mono-rhamnolipid, C7-C16-mono-rhamnolipid, C7-C17-mono-rhamnolipid, C7-C18-mono-rhamnolipid, C8-C6-mono-rhamnolipid, C8-C7-mono-rhamnolipid, C8-C8-mono-rhamnolipid, C8-C9-mono-rhamnolipid, C8-C10-mono-rhamnolipid, C8-C11-mono-rhamnolipid, C8-C12-mono-rhamnolipid, C8-C13-mono-rhamnolipid, C8-C14-mono-rhamnolipid, C8-C15-mono-rhamnolipid, C8-C16-mono-rhamnolipid, C8-C17-mono-rhamnolipid, C8-C18-mono-rhamnolipid, C9-C6-mono-rhamnolipid, C9-C7-mono-rhamnolipid, C9-C8-mono-rhamnolipid, C9-C9-mono-rhamnolipid, C9-C10-mono-rhamnolipid, C9-C11-mono-rhamnolipid, C9-C12-mono-rhamnolipid, C9-C13-mono-rhamnolipid, C9-C14-mono-rhamnolipid, C9-C15-mono-rhamnolipid, C9-C16-mono-rhamnolipid, C9-C17-mono-rhamnolipid, C9-C18-mono-rhamnolipid, C10-C6-mono-rhamnolipid, C0-C7-mono-rhamnolipid, C10-C8-mono-rhamnolipid, C10-C9-mono-rhamnolipid, C10-C10-mono-rhamnolipid, C10-C11-mono-rhamnolipid, C10-C12-mono-rhamnolipid, C10-C13-mono-rhamnolipid, C10-C14-mono-rhamnolipid, C10-C15-mono-rhamnolipid, C10-C16-mono-rhamnolipid, C10-C17-mono-rhamnolipid, C10-C18-mono-rhamnolipid, C11-C6-mono-rhamnolipid, C11-C7-mono-rhamnolipid, C11-C8-mono-rhamnolipid, C11-C9-mono-rhamnolipid, C11-C10-mono-rhamnolipid, C11-C11-mono-rhamnolipid, C11-C12-mono-rhamnolipid, C11-C13-mono-rhamnolipid, C11-C14-mono-rhamnolipid, C11-C15-mono-rhamnolipid, C11-C16-mono-rhamnolipid, C11-C17-mono-rhamnolipid, C11-C18-mono-rhamnolipid, C12-C6-mono-rhamnolipid, C12-C7-mono-rhamnolipid, C12-C8-mono-rhamnolipid, C12-C9-mono-rhamnolipid, C12-C10-mono-rhamnolipid, C12-C11-mono-rhamnolipid, C12-C12-mono-rhamnolipid, C12-C13-mono-rhamnolipid, C12-C14-mono-rhamnolipid, C12-C15-mono-rhamnolipid, C12-C16-mono-rhamnolipid, C12-C17-mono-rhamnolipid, C12-C18-mono-rhamnolipid, C13-C6-mono-rhamnolipid, C13-C7-mono-rhamnolipid, C13-C8-mono-rhamnolipid, C13-C9-mono-rhamnolipid, C13-C10-mono-rhamnolipid, C13-C11-mono-rhamnolipid, C13-C12-mono-rhamnolipid, C13-C13-mono-rhamnolipid, C13-C14-mono-rhamnolipid, C13-C15-mono-rhamnolipid, C13-C16-mono-rhamnolipid, C13-C17-mono-rhamnolipid, C13-C18-mono-rhamnolipid, C14-C6-mono-rhamnolipid, C14-C7-mono-rhamnolipid, C14-C8-mono-rhamnolipid, C14-C9-mono-rhamnolipid, C14-C10-mono-rhamnolipid, C14-C11-mono-rhamnolipid, C14-C12-mono-rhamnolipid, C14-C13-mono-rhamnolipid, C14-C14-mono-rhamnolipid, C14-C15-mono-rhamnolipid, C14-C16-mono-rhamnolipid, C14-C17-mono-rhamnolipid, C14-C18-mono-rhamnolipid, C15-C6-mono-rhamnolipid, C15-C7-mono-rhamnolipid, C15-C8-mono-rhamnolipid, C15-C9-mono-rhamnolipid, C15-C10-mono-rhamnolipid, C15-C11-mono-rhamnolipid, C15-C12-mono-rhamnolipid, C15-C13-mono-rhamnolipid, C15-C14-mono-rhamnolipid, C15-C15-mono-rhamnolipid, C15-C16-mono-rhamnolipid, C15-C17-mono-rhamnolipid, C15-C18-mono-rhamnolipid, C16-C6-mono-rhamnolipid, C16-C7-mono-rhamnolipid, C16-C8-mono-rhamnolipid, C16-C9-mono-rhamnolipid, C16-C10-mono-rhamnolipid, C16-C11-mono-rhamnolipid, C16-C12-mono-rhamnolipid, C16-C13-mono-rhamnolipid, C16-C14-mono-rhamnolipid, C16-C15-mono-rhamnolipid, C16-C16-mono-rhamnolipid, C16-C17-mono-rhamnolipid, C16-C18-mono-rhamnolipid, C17-C6-mono-rhamnolipid, C17-C7-mono-rhamnolipid, C17-C8-mono-rhamnolipid, C17-C9-mono-rhamnolipid, C17-C10-mono-rhamnolipid, C17-C11-mono-rhamnolipid, C17-C12-mono-rhamnolipid, C17-C13-mono-rhamnolipid, C17-C14-mono-rhamnolipid, C17-C15-mono-rhamnolipid, C17-C16-mono-rhamnolipid, C17-C17-mono-rhamnolipid, C17-C18-mono-rhamnolipid, C18-C6-mono-rhamnolipid, C18-C7-mono-rhamnolipid, C18-C8-mono-rhamnolipid, C18-C9-mono-rhamnolipid, C18-C10-mono-rhamnolipid, C18-C11-mono-rhamnolipid, C18-C12-mono-rhamnolipid, C18-C13-mono-rhamnolipid, C18-C14-mono-rhamnolipid, C18-C15-mono-rhamnolipid, C18-C16-mono-rhamnolipid, C18-C17-mono-rhamnolipid and C618-C18-mono-rhamnolipid. It is to be understood that the above list shall also include such mono-rhamnolipids in which the beta-hydroxy-fatty comprises a double bond, such as C10-C12:1, wherein the C12 beta-hydroxy-fatty acid residue comprises the double bond.

Particularly preferred mono-rhamnolipids are, e.g., C10-C10-mono-rhamnolipid C10-C12-mono-rhamnolipid, C10-C12:1-mono-rhamnolipid and C10-C8-mono-rhamnolipid.

C10-C10-mono-rhamnolipid may also be referred to as L-rhamnosyl-β-hydroxydecanoyl-β-hydroxydecanoate (RhanC₁₀C₁₀). It may be referred to as Rha-C₁₀-C₁₀ -mono-rhamnolipid and is described by the formula C₂₆H₄₈O₉ (IUPAC Name is 3-[3-[(2R,3R,4R,5R,6S)-3,4,5-trihydroxy-6-methyloxan-2-yl]oxydecanoyloxy]decanoic acid).

C10-C12-mono-rhamnolipid may also be referred to as L-rhamnosyl-β-hydroxydecanoyl-β-hydroxydodecanoate (RhC₁₀C₁₂). It may further be referred to as Rha-C₁₀-C₁₂ . It has a formula of C₃₄H₆₂O₁₃.

C10-C12:1-mono-rhamnolipid may also be referred to as L-rhamnosyl-P-hydroxydecanoyl-P-hydroxydodecenoate (RhaC₁₀C_{12:1}). It may further be referred to as Rha-C₁₀-C_{12:1} . It has a formula of C₃₄H₆₀O₁₃.

C10-C8-mono-rhamnolipid may also be referred to as L-rhamnosyl-β-hydroxydecanoyl-β-hydroxyoctanoate (RhaC₁₀C₈). It may further be referred to as Rha-C₁₀-C₈ . It has a formula of C₃₀H₅₄O₁₃.

Di-rhamnolipids have two rhamnose sugar rings.

The following preferred di-rhamnolipids shall be mentioned by way of example: C6-C6-di-rhamnolipid, C6-C7-di-rhamnolipid, C6-C8-di-rhamnolipid, C6-C9-di-rhamnolipid, C6-C10-di-rhamnolipid, C6-C11-di-rhamnolipid, C6-C12-di-rhamnolipid, C6-C13-di-rhamnolipid, C6-C14-di-rhamnolipid, C6-C15-di-rhamnolipid, C6-C16-di-rhamnolipid, C6-C17-di-rhamnolipid, C6-C18-di-rhamnolipid, C7-C6-di-rhamnolipid, C7-C7-di-rhamnolipid, C7-C8-di-rhamnolipid, C7-C9-di-rhamnolipid, C7-C10-di-rhamnolipid, C7-C11-di-rhamnolipid, C7-C12-di-rhamnolipid, C7-C13-di-rhamnolipid, C7-C14-di-rhamnolipid, C7-C15-di-rhamnolipid, C7-C16-di-rhamnolipid, C7-C17-di-rhamnolipid, C7-C18-di-rhamnolipid, C8-C6-di-rhamnolipid, C8-C7-di-rhamnolipid, C8-C8-di-rhamnolipid, C8-C9-di-rhamnolipid, C8-C10-di-rhamnolipid, C8-C11-di-rhamnolipid, C8-C12-di-rhamnolipid, C8-C13-di-rhamnolipid, C8-C14-di-rhamnolipid, C8-C15-di-rhamnolipid, C8-C16-di-rhamnolipid, C8-C17-di-rhamnolipid, C8-C18-di-rhamnolipid, C9-C6-di-rhamnolipid, C9-C7-di-rhamnolipid, C9-C8-di-rhamnolipid, C9-C9-di-rhamnolipid, C9-C10-di-rhamnolipid, C9-C11-di-rhamnolipid, C9-C12-di-rhamnolipid, C9-C13-di-rhamnolipid, C9-C14-di-rhamnolipid, C9-C15-di-rhamnolipid, C9-C16-di-rhamnolipid, C9-C17-di-rhamnolipid, C9-C18-di-rhamnolipid, C10-C6-di-rhamnolipid, C0-C7-di-rhamnolipid, C10-C8-di-rhamnolipid, C10-C9-di-rhamnolipid, C10-C10-di-rhamnolipid, C10-C11-di-rhamnolipid, C10-C12-di-rhamnolipid, C10-C13-di-rhamnolipid, C10-C14-di-rhamnolipid, C10-C15-di-rhamnolipid, C10-C16-di-rhamnolipid, C10-C17-di-rhamnolipid, C10-C18-di-rhamnolipid, C11-C6-di-rhamnolipid, C11-C7-di-rhamnolipid, C11-C8-di-rhamnolipid, C11-C9-di-rhamnolipid, C11-C10-di-rhamnolipid, C11-C11-di-rhamnolipid, C11-C12-di-rhamnolipid, C11-C13-di-rhamnolipid, C11-C14-di-rhamnolipid, C11-C15-di-rhamnolipid, C11-C16-di-rhamnolipid, C11-C17-di-rhamnolipid, C11-C18-di-rhamnolipid, C12-C6-di-rhamnolipid, C12-C7-di-rhamnolipid, C12-C8-di-rhamnolipid, C12-C9-di-rhamnolipid, C12-C10-di-rhamnolipid, C12-C11-di-rhamnolipid, C12-C12-di-rhamnolipid, C12-C13-di-rhamnolipid, C12-C14-di-rhamnolipid, C12-C15-di-rhamnolipid, C12-C16-di-rhamnolipid, C12-C17-di-rhamnolipid, C12-C18-di-rhamnolipid, C13-C6-di-rhamnolipid, C13-C7-di-rhamnolipid, C13-C8-di-rhamnolipid, C13-C9-di-rhamnolipid, C13-C10-di-rhamnolipid, C13-C11-di-rhamnolipid, C13-C12-di-rhamnolipid, C13-C13-di-rhamnolipid, C13-C14-di-rhamnolipid, C13-C15-di-rhamnolipid, C13-C16-di-rhamnolipid, C13-C17-di-rhamnolipid, C13-C18-di-rhamnolipid, C14-C6-di-rhamnolipid, C14-C7-di-rhamnolipid, C14-C8-di-rhamnolipid, C14-C9-di-rhamnolipid, C14-C10-di-rhamnolipid, C14-C11-di-rhamnolipid, C14-C12-di-rhamnolipid, C14-C13-di-rhamnolipid, C14-C14-di-rhamnolipid, C14-C15-di-rhamnolipid, C14-C16-di-rhamnolipid, C14-C17-di-rhamnolipid, C14-C18-di-rhamnolipid, C15-C6-di-rhamnolipid, C15-C7-di-rhamnolipid, C15-C8-di-rhamnolipid, C15-C9-di-rhamnolipid, C15-C10-di-rhamnolipid, C15-C11-di-rhamnolipid, C15-C12-di-rhamnolipid, C15-C13-di-rhamnolipid, C15-C14-di-rhamnolipid, C15-C15-di-rhamnolipid, C15-C16-di-rhamnolipid, C15-C17-di-rhamnolipid, C15-C18-di-rhamnolipid, C16-C6-di-rhamnolipid, C16-C7-di-rhamnolipid, C16-C8-di-rhamnolipid, C16-C9-di-rhamnolipid, C16-C10-di-rhamnolipid, C16-C11-di-rhamnolipid, C16-C12-di-rhamnolipid, C16-C13-di-rhamnolipid, C16-C14-di-rhamnolipid, C16-C15-di-rhamnolipid, C16-C16-di-rhamnolipid, C16-C17-di-rhamnolipid, C16-C18-di-rhamnolipid, C17-C6-di-rhamnolipid, C17-C7-di-rhamnolipid, C17-C8-di-rhamnolipid, C17-C9-di-rhamnolipid, C17-C10-di-rhamnolipid, C17-C11-di-rhamnolipid, C17-C12-di-rhamnolipid, C17-C13-di-rhamnolipid, C17-C14-di-rhamnolipid, C17-C15-di-rhamnolipid, C17-C16-di-rhamnolipid, C17-C17-di-rhamnolipid, C17-C18-di-rhamnolipid, C18-C6-di-rhamnolipid, C18-C7-di-rhamnolipid, C18-C8-di-rhamnolipid, C18-C9-di-rhamnolipid, C18-C10-di-rhamnolipid, C18-C11-di-rhamnolipid, C18-C12-di-rhamnolipid, C18-C13-di-rhamnolipid, C18-C14-di-rhamnolipid, C18-C15-di-rhamnolipid, C18-C16-di-rhamnolipid, C18-C17-di-rhamnolipid and C618-C18-di-rhamnolipid. It is to be understood that the above list shall also include such di-rhamnolipids in which the beta-hydroxy-fatty comprises a double bond, such as C10-C12:1, wherein the C12 beta-hydroxy-fatty acid residue comprises the double bond.

Particularly preferred di-rhamnolipids are, e.g., C10-C10-di-rhamnolipid C10-C12-di-rhamnolipid, C10-C12:1-di-rhamnolipid and C10-C8-di-rhamnolipid.

C10-C10-di-rhamnolipid may also be referred to as L-rhamnosyl-L-rhamnosyl-β-hydroxydecanoyl-β-hydroxydecanoate (Rha2C₁₀C₁₀). It may further be referred to as Rha-Rha-C₁₀-C₁₀ . It has a formula of C₃₂H₅₈O₁₃ (IUPAC name is 3-[3-[4,5-dihydroxy-6-methyl-3-(3,4,5-trihydroxy-6-methyloxan-2-yl)oxyoxan-2-yl]oxydecanoyloxy]decanoic acid).

C10-C12-di-rhamnolipid may also be referred to as L-rhamnosyl-L-rhamnosyl-β-hydroxydecanoyl-β-hydroxydodecanoate (Rha2C₁₀C₁₂). It may further be referred to as Rha-Rha-C₁₀-C₁₂ . It has a formula of C₃₄H₆₂O₁₃.

C10-C12:1-di-rhamnolipid may also be referred to as L-rbamnosyl-L-rbamnosyl-β-hydroxydecanoyl-P-hydroxydodecenoate (Rha2C₁₀C_{12:1}). It may further be referred to as Rha-Rha-C₁₀-C_{12:1} .It has a formula of C₃₄H₆₀O₁₃.

C10-C8-di-rhamnolipid may also be referred to as L-rhamnosyl-L-rhamnosyl-p-hydroxydecanoyl-β-hydroxyoctanoate (Rha2C₁₀C₈). It may further be referred to as Rha-Rha-C₁₀-C₈ . It has a formula of C₃₀H₅₄O₁₃ .

According to the invention, the amount of the at least one di-rhamnolipid present in the composition, that is the amount of the C10-C12 di-rhamnolipid, or the C10-C12:1 di-rhamnolipid, or the combination thereof is at least 10% by weight, based on the total weight of all rhamnolipids present in the composition. If both, C10-C12 di-rhamnolipid, or the C10-C12:1 di-rhamnolipid are present, this means that the sum of both is at least 10% by weight.

The amount of each rhamnolipid present in the composition may be determined via high performance liquid chromatography (HPLC) analytics. Two general approaches are possible deviating in the kind of detector coupled to the HPLC. 1) Usage of a mass spectrometer to clearly identify and quantify the rhamnolipid congeners. 2) The usage of detectors that only allow quantification like Corona charged aerosol detector, evaporative light scattering detector or ultraviolet light detector with previous derivatization of the sample material. For the usage of these detectors, the availability of an analytical standard of all congeners that are being quantified is indispensable.

Preferably, the amount of the at least one di-rhamnolipids present in the composition is at least 15% by weight, more preferably at least 20% by weight, more preferably at least 30% by weight, more preferably at least 40% by weight, more preferably at least 50% by weight, more preferably at least 60% by weight, more preferably at least 70 % by weight, more preferably at least 80 % by weight, more preferably at least 90 % by weight, based on the total weight of all rhamnolipids present in the composition.

It is to be understood that the composition may comprise besides the C10-C12 di-rhamnolipid and/or the C10-C12:1 di-rhamnolipid one or more further rhamnolipids, such as at least one further di-rhamnolipids and/or at least one mono-rhamnolipid.

The composition may e.g. additionally comprise C10-C8 di-rhamnolipid. Preferably, the amount of C10-C8 di-rhamnolipid is less than 20% by weight, more preferably less than 10% by weight composition, more preferably less than 5% by weight, such as less than 3% by weight, such as less than 2% by weight, based on the total weight of all rhamnolipids.

The composition may e.g. additionally comprise C10-C10 di-rhamnolipid. Preferably, the composition comprises less than 80% by weight, such as less than 70% by weight, such as less than 60%, preferably less than 50% by weight, more preferably less than 40% by weight, more preferably less than 30% by weight, more preferably less than 20% by weight, more preferably less 10% by weight, more preferably less than 5% by weight, such as of from 0 to 5% by weight, C10-C10 di-rhamnolipid, based on the total weight of all rhamnolipids.

The composition may e.g. additionally comprise at least one mono-rhamnolipid. Preferably, the composition comprises less than 20 % by weight, preferably less than 15 % by weight, more preferably less than 10 % by weight, preferably less than 5% by weight, more preferably less than 2% by weight, more preferably less than 1% by weight, such as of from 0 to 1 % by weight, preferably less than 0,5 % by weight, more preferably no, mono-rhamnolipids, based on the total weight of all rhamnolipids present in the composition and calculated as the sum of all mono-rhamnolipids present in the composition.

If the composition comprises at least one mono-rhamnolipid, the weight ratio of all di-rhamnolipids present in the composition to all mono-rhamnolipids present in the composition is preferably greater than 6:4, such as greater than 9:1, such as greater than 95:5.

### First particularly preferred embodiment

According to a first particularly preferred embodiment, the amount of the at least one di-rhamnolipid present in the composition is at least 15% by weight based on the total weight of all rhamnolipids present in the composition and calculated as the sum of C10-C12 di-rhamnolipid and C10-C12:1 di-rhamnolipid. It is to be understood that composition comprises either C10-C12 di-rhamnolipid or C10-C12:1 di-rhamnolipid or a mixture thereof. Preferably, the amount of the at least one di-rhamnolipid present in the composition is in the range of from 15% by weight to 50 % by weight, preferably in the range of from 25 to 45% by weight, more preferably in the range of from 30 to 40% by weight, based on the total weight of all rhamnolipids present in the composition and calculated as the sum of C10-C12 di-rhamnolipid and C10-C12: 1di-rhamnolipid

Preferably, the composition according to this embodiment comprises the C10-C12 di-rhamnolipid in an amount in the range of from 10 to 25% by weight, preferably in the range of from 11 to 24% by weight, more preferably in the range of from 12 to 23% by weight, more preferably in the range of from 13 to 23% by weight, preferably in the range of from 14 to 21% by weight and even more preferably in the range of from 15 to 20% by weight.

Preferably, the composition according to this embodiment comprises wherein the composition according to this embodiment comprises the C10-C12:1 di-rhamnolipid in an amount in the range of from 5 to 25% by weight, preferably in an amount in the range of from 10 to 25% by weight, more preferably in the range of from 11 to 15% by weight.

Thus, the composition according to this embodiment preferably comprises the C10-C12 di-rhamnolipid in an amount in the range of from 10 to 25% by weight, preferably in the range of from 11 to 24% by weight, more preferably in the range of from 12 to 23% by weight, more preferably in the range of from 13 to 23% by weight, preferably in the range of from 14 to 21% by weight and even preferably in the range of from 15 to 20% by weight and the C10-C12:1 di-rhamnolipid in an amount in the range of from 5 to 25% by weight, more preferably in an amount in the range of from 10 to 25% by weight, more preferably in the range of from 11 to 15% by weight.

The composition according to this embodiment in particular comprises the C10-C12 di-rhamnolipid in an amount in the range of from 15 to 20% by weight and the C10-C12:1 di-rhamnolipid in an amount in the range of from 11 to 15% by weight.

The composition may further comprise C10-C10 di-rhamnolipid. Preferably, the composition comprises 50 to 85% by weight, preferably 50 to 83% by weight, more preferably less than 55 to 75% by weight, more preferably 55 to 73% by weight, more preferably less than 60 to 70% by weight, more preferably less 60 to 68% by weight, more preferably 60 to 65% by weight, C10-C10 di-rhamnolipid, based on the total weight of all rhamnolipids.

The composition may further comprise C10-C8 di-rhamnolipid. Preferably, the composition comprises less than 10% by weight, preferably 0-7% by weight, such as 2 to 6 % by weight, C10-C8 di-rhamnolipid, based on the total weight of all rhamnolipids.

The composition may further comprise C10-C10 mono-rhamnolipid. Preferably, the composition comprises less than 10% by weight, preferably less than 5% by weight, more preferably less than 2% by weight, such as of from 0 to 1.5 % by weight, C10-C10 mono-rhamnolipid, based on the total weight of all rhamnolipids present in the composition.

Thus, the composition according to this embodiment preferably comprises
- the C10-C12 di-rhamnolipid in an amount in the range of from 10 to 25% by weight, preferably in the range of from 11 to 24% by weight, more preferably in the range of from 12 to 23% by weight, more preferably in the range of from 13 to 23% by weight, preferably in the range of from 14 to 21% by weight and even more preferably in the range of from 15 to 20% by weight
- the C10-C12:1 di-rhamnolipid in an amount in the range of from 5 to 25% by weight and the C10-C12:1 di-rhamnolipid in an amount in the range of from 10 to 25% by weight, preferably in the range of from 11 to 15% by weight,
- less than 60 to 70% by weight, more preferably less 60 to 68% by weight, more preferably 60 to 65% by weight, C10-C10 di-rhamnolipid, based on the total weight of all rhamnolipids.
- less than 10% by weight, preferably 0-7% by weight, such as 2 to 6 % by weight, C10-C8 di-rhamnolipid, based on the total weight of all rhamnolipid,
- less than 10% by weight, preferably less than 5% by weight, more preferably less than 2% by weight, such as of from 0 to 1.5 % by weight, C10-C10 mono-rhamnolipid, based on the total weight of all rhamnolipids present in the composition.

By way of example, the composition comprises
- the C10-C12 di-rhamnolipid in an amount in the range of from 15 to 20% by weight
- the C10-C12:1 di-rhamnolipid in an amount in the range of from 11 to 15% by weight,
- 60 to 65% by weight, C10-C10 di-rhamnolipid
- 2 to 6 % by weight, C10-C8 di-rhamnolipid,
- 0 to 1.5 % by weight, C10-C10 mono-rhamnolipid.

According to a further particularly preferred embodiment, the composition comprises the C10-C12 di-rhamnolipid in an amount of at least 15% by weight. Preferably, in this case, the composition comprises less than 10 % mono-rhamnolipids, calculated as sum of all mono-rhamnolipids present in the composition. More preferably the composition comprises at least 20% by weight C10-C12 di-rhamnolipid, more preferably at least 30% by weight, more preferably at least 40% by weight, more preferably at least 50% by weight, more preferably at least 60% by weight, more preferably at least 70% by weight, more preferably at least 80% by weight, more preferably at least 90% by weight, more preferably in an amount of at least 99% by weight, based on the total weight of all rhamnolipids present in the composition. More preferably, the composition consists of C10-C12 di-rhamnolipid.

According to a further particularly preferred embodiment, the composition comprises the C10-C12:1 di-rhamnolipid in an amount of at least 15% by weight. Preferably, in this case, the composition comprises less than 10 % mono-rhamnolipids, calculated as sum of all mono-rhamnolipids, present in the composition. More preferably the composition comprises at least 20% by weight C10-C12:1 di-rhamnolipid, more preferably at least 30% by weight, more preferably at least 40% by weight, more preferably at least 50% by weight, more preferably at least 60% by weight, more preferably at least 70% by weight, more preferably at least 80% by weight, more preferably at least 90% by weight, more preferably in an amount of at least 99% by weight, based on the total weight of all rhamnolipids present in the composition. More preferably, the composition consists of C10-C12:1 di-rhamnolipid.

According to a further particularly preferred embodiment, the composition comprises a mixture of C10-C12:1 di-rhamnolipid and 10-C12:1 di- rhamnolipid, in an amount of at least 15% by weight. Preferably, in this case, the composition comprises less than 10 % mono-rhamnolipids, calculated as sum of all mono-rhamnolipids present in the composition. More preferably, the composition comprises at least 20% by weight of the mixture of C10-C12:1 di-rhamnolipid and 10-C12:1 di-rhamnolipid, more preferably at least 30% by weight, more preferably at least 40% by weight, more preferably at least 50% by weight, more preferably at least 60% by weight, more preferably at least 70% by weight, more preferably at least 80% by weight, more preferably at least 90% by weight, more preferably in an amount of at least 99% by weight, based on the total weight of all rhamnolipids present in the composition. More preferably, the composition consists of mixture of C10-C12:1 di-rhamnolipid and 10-C12:1 di- rhamnolipid.

According to a further particularly preferred embodiment the composition comprises
- a C10-C12 di-rhamnolipid, the composition comprises at least 20% by weight, such as at least 30% or at least 40% by weight of C10-C12 di-rhamnolipids, based on the total weight of all rhamnolipids present in the composition
- a C10-C12:1 di-rhamnolipid, the composition comprises at least 15% by weight, such as at least 20% by weight, such as at least 30% of C10-C12:1 di-rhamnolipids, based on the total weight of all rhamnolipid present in the composition.

Further, the present inventions relates to a method for pathogen control, comprising
providing a composition comprising a mono-rhamnolipid and a di-rhamnolipid mixture, wherein the mono-rhamnolipid and di-rhamnolipid mixture has a weight ratio of di-rhamnolipids to mono-rhamnolipids of greater than 90:10, such as of greater than 95:5 or greater than 97:3, and
contacting a plant with an effective amount of said composition such that the pathogen is controlled.

Preferably, wherein the composition in this method comprises less than 10% by weight, preferably less than 5% by weight, more preferably less than 2% by weight, more preferably less than 1% by weight, preferably no, mono-rhamnolipids, based on the total weight of all rhamnolipids present in the composition.

Preferably, the composition in this method comprises di-rhamnolipids in an amount of at least 15% by weight, more preferably at least 20% by weight, more preferably at least 30% by weight, more preferably at least 40% by weight, more preferably at least 50% by weight, more preferably at least 60% by weight, more preferably at least 70 % by weight, more preferably at least 80% by weight, more preferably at least 90% by weight, calculated as the sum of all di-rhamnolipids present in the composition and based on the total weight of all rhamnolipids present in the composition.

Preferably, the di-rhamnolipids mixture comprises at least one, preferably at least two of the following di-rhamnolipid: C10-C10 di-rhamnolipid, C10-C12 di-rhamnolipid, C10-C12:1 di-rhamnolipid and C10-C8 di-rhamnolipid. Preferably, the di-rhamnolipids mixture consists of C10-C10 di-rhamnolipid and C10-C12 di-rhamnolipid, or of C10-C10 di-rhamnolipid and C10-C12:1 di-rhamnolipid, or of C10-C10 di-rhamnolipid and C10-C12 di-rhamnolipid and C10-C12:1 di-rhamnolipid, or of C10-C12 di-rhamnolipid and C10-C12:1 di-rhamnolipid, or of C10-C10 di-rhamnolipid, C10-C12 di-rhamnolipid, C10-C12:1 di-rhamnolipid and C10-C8 di-rhamnolipid.

The compositions described herein may be prepared by methods well known in the art. Further, they may be combined with an agriculturally-acceptable carrier. Suitable agricultural carriers can be solid or liquid and are well-known in the art. The term "agriculturally-acceptable carrier", preferably, encompasses all adjuvants, inert components, dispersants, surfactants, binders, etc. that are well known to those skilled in pesticide formulation. The composition may be mixed with one or more solid or liquid adjuvants and prepared by various means, e.g., by homogeneously mixing the composition with suitable adjuvants using well-known formulation techniques. Preferably, the composition is an aqueous composition.

In accordance with the present invention, the plant is contacted with an effective amount of said composition, i.e. with an effective amount such that the pathogen is controlled. Accordingly, the effective amount is a pesticidally-effective amount, i.e. an amount of the composition that is able to bring about death to the at least one pathogen, or reduce growth, feeding, or normal physiological development of the pathogen.

Contacting the plant with the composition described herein may be carried out by any method deemed appropriate such as by watering, by soil application immersion, and/or spraying. Preferably said plant is contacted with said composition by watering or by soil application or spraying the plant with said composition. In the of case of seeds, the seeds may be also contacted with said composition by applying one or more coats comprising an effective amount of the composition as referred to herein. Accordingly, the term "contacting" as used herein relates to any suitable administration of said compound, in particular spraying, infiltrating or root watering.

In a preferred embodiment of the present invention, the plant is contacted with said composition by contacting the roots of the plants with said composition. Preferably, this is achieved by root watering, in particular by watering the plant with the composition as defined herein. In case of sugar beets, the taproot, or any other part of the root, might be contacted with the composition. Alternatively, the shoots or leaves of the plant may be contacted with the composition.

In another preferred embodiment of the present invention, the plant is contacted with said composition by spraying said composition onto the plant. In some embodiments, the composition is sprayed on the leaves of the plant. It is to be understood, that the composition is exogenously applied to (i.e. contacted with) the plant.

The term "plant" refers to any organism, which is capable of photosynthesis. Encompassed within the scope of the term "plant" are all genera and species of higher and lower plants of the Plant Kingdom. Annual, perennial, monocotyledonous and dicotyledonous plants and gymnosperms are preferred. The class of plants that can be used in the method of the invention is generally as broad as the class of higher and lower plants, such monocotyledonous and dicotyledonous plants, gymnosperms, ferns, and multicellular algae. In particular, the plant is a monocot plant or a dicot plant. Preferred are plants and plant materials of the following plant families: Amaranthaceae, Brassicaceae, Carophyllace-ae, Chenopodiaceae, Compositae, Cucurbitaceae, Labiatae, Leguminosae, Papilionoideae, Liliaceae, Linaceae, Malvaceae, Rosaceae, Saxifragaceae, Scrophulariaceae, Solanaceae, Tetragoniaceae. The plants are furthermore selected in particular from among dicoty-ledonous crop plants such as, for example, from the families of the Leguminosae such as pea, alfalfa and soybean; the family of the Umbelliferae, such as the genus Daucus (such as the species carota (carrot)) and Apium (such as the species graveolens var. dulce (celery)) and many others; the family of the Solanaceae, such as the genus Lycopersicon, such as the species esculentum (tomato) and the genus Solanum, such as the species tuberosum (potato) and melongena (aubergine), tobacco and many others; and the genus Capsicum, such as the species annum (pepper) and many others; the family of the Leguminosae, such as the genus Glycine, such as the species max (soybean) and many others; and the family of the Cruciferae, such as the genus Brassica, such as the species napus (oilseed rape), campestris (beet), oleracea cv Tastie (cabbage), oleracea cv Snowball Y (cauliflower) and oleracea cv Emperor (broccoli); and the genus Arabidopsis, such as the species thaliana and many others; the family of the Compositae, such as the genus Lactuca, such as the species sativa (lettuce) and many others.

In a preferred embodiment, the plant is a cereal plant, such as wheat, barley, sorghum and millet, rye, triticale, maize, rice or oats or sugarcane. Especially preferred plants are Nicotiana tabacum, oilseed rape, soybean, corn (maize), rice, wheat, linseed, potato and tagetes. For example, the plant thus may be a soybean plant. In some embodiments, the plant may be a tobacco plant. In some embodiments, the plant may be a tomato plant. In some embodiments, the plant may be a barley plant.

In a particularly preferred embodiment, the plant is a sugar beet plant. For example, the sugar beet plant may be a sugar beet plant belonging to the variety Annarosa or Danicia.

The plant to be contacted with the composition as set forth herein may be infested with a pathogen (herein also referred to a "pest"). Thus, infestation with the pathogen may be reduced by carrying out the method of the present invention. Thus, infestation with the pathogen may be reduced by carrying out the method of the present invention. Alternatively, the plant is not infested with the pathogen. Thus, infestation with the pathogen may be reduced by carrying out the method of the present invention.

The term "pathogen" is well understood by the skilled person. As used herein, the term preferably refers to an organism that can infect and cause harm to a plant. Thus, the pathogen shall be a plant pathogen, such as a sugar beet pathogen. Preferably, the plant pathogen is a bacterium, fungus, oomycete, virus, or nematode. The plant that is contacted in accordance with the method of the present invention is preferably a host of the pathogen that shall be controlled.

The plant pathogens are preferably pathogens selected from the group consisting of a nematode, an insect, a bacterium, a fungus, or an oomycete, and/or a virus.

In some embodiments, the plant pathogen is a nematode.

In an embodiment, the nematode is a root-knot nematode (Meloidogyne spec.).
In an embodiment, the nematode is a cyst nematode (such as Heterodera spec., or Globodera spec.). In an embodiment, the nematode is a migratory endoparasitic root nematode (such as Radopholus spec., Pratylenchus spec.).
In an embodiment, the nematode is a virus-transmitting ectoparasitic root nematode (such as Longidorus spec., Xiphinema spec., or Trichodorus spec.).
In an embodiment, the nematode is a stem and bulb nematode (such as Ditylenchus dipsaci).

Preferably, the nematode belongs to the genus *Heterodera.* More preferably, the nematode is selected from *Heterodera schachtii. Heterodera glycines, Heterodera sacchari, Heterodera avenae, Heterodera latipons, Heterodera filipjevi,* and *Heterodera zea.*

In a particularly preferred embodiment, the nematode is *Heterodera schachtii* which is one of the major pathogens for sugar beet plants (see also examples section)

Furthermore, the nematode may be *Meloidogyne spp* or *Meloidogyne incognita. M. incognita* has a worldwide occurrence and numerous hosts.

In some embodiments, the plant pathogen is an insect.

In some embodiments, the plant pathogen is a bacterium, such as *Erwinia, Pectobacterium, Pantoea, Agrobacterium, Pseudomonas, Ralstonia, Burkholderia, Acidovorax, Xanthomonas, Clavibacter, Streptomyces, Xylella, Spiroplasma,* or *Phytoplasma.* For example, the plant pathogen may be *Pseudomonas syringae,* such as *Pseudomonas syringae pv maculicola* ES4326 (Psm). *Pseudomonas syringae* is a Gram-negative bacterium. As a plant pathogen, it is known to infect a wide range of species, and exists as over 50 different pathovars. The pathovars are well known in the art and are available from international culture collections. Other bacterial plant pathogens are *Xanthomonas or Erwinia* such *as Erwinia carotovora, Ralstonia,* or *Clavibacter.*

In some embodiments, the plant pathogen is a fungus, such as Fusarium spp., Cladosporium, or Erysiphe.

In some embodiments, the plant pathogen is an oomycete, such as the *oomycete Hyaloperonospora arabidopsidis* (Hpa), such Phytophthora spec., Phytium spec., or Peronospora spec.

In some embodiments, the plant pathogen is a virus, such as the Beet Curly Top Virus (BCTV) or Tobacco mosaic virus (TMV). Moreover, the virus may be Tobacco Ring spot virus, Tobacco Streak virus, or Tomato spotted wilt virus.

In the context of the method of the present invention, it is envisaged that the plant to be contacted with the composition is grown in a greenhouse or, in particular, on a field. Thus, the plant is preferably a greenhouse-grown or field grown plant. The plant can be contacted with the composition as referred to herein at any stage after germination. E.g., it is envisaged to contact said plant with said composition post-emergence. Of course, the composition might be also applied at later stages.

Preferably, the plant is contacted at least once with the composition. However, it is envisaged that plant is contacted more than once with the composition. For example, the plant may be contacted once a week, or once a month with the composition.

The composition disclosed in the context of the present invention may also be also administered to a plant, i.e. contacted with a plant, in combination with a plant nutrient such as nitrate, ammonium, potassium, phosphate, manganese, iron. Further, the composition may be also contacted with a plant in combination with further plant protection product or salt or derivative thereof. Said at least one plant nutrient may be a macronutrient or micronutrient. Preferably, said at least one nutrient is one or more nutrient(s) selected from the group of nutrients consisting of ammonium sulphate, calcium carbonate, calcium sulphate calcium nitrate, magnesium phosphate, magnesium sulphate, mono potassium phosphate, potassium bicarbonate, potassium nitrate, and potassium sulphate.

The present invention further relates to a plant seed coated with a composition as set forth herein. The plant seed is preferably a seed of a plant as described above. Preferably, said seed shall comprise and an artificial coat (i.e. with a coat which is not natural with respect to said seed) comprising an effective amount of the composition as described above. Accordingly, the seed may be encapsulated with a composition as described above). Said composition shall be heterologous with respect to the to the plant seed.

The present invention further relates to a method for the production of the plant seed of the present invention. Said method shall comprise coating a plant seed with the composition as set forth herein above in connection with the method of pest control.

The present invention also relates to a plant comprising a composition set forth herein above in connection with the method of the present invention. Preferably, said composition is an exogenous composition. Preferably, the plant comprises the composition on its surface, i.e. on parts of its surface. More preferably, the plant comprises the composition on the roots, i.e. on the surface or part of the surface of the roots. In some embodiments, the plant comprises the composition on the leaves, i.e. on the surface or part of the surface of the leaves. In some embodiments, the plant comprises the composition on the shoot, i.e. on the surface or part of the surface of the shoot.

The following preferred embodiments are useful for understanding the invention:
1. A method for pathogen control, comprising
   providing a composition comprising at least one di-rhamnolipid, wherein the di-rhamnolipid is a C10-C12 di-rhamnolipid, or a C10-C12:1 di-rhamnolipid, or a combination thereof, wherein the amount of at least one di-rhamnolipid present in the composition is at least 10% by weight, based on the total weight of all rhamnolipids present in the composition, and
   contacting a plant with an effective amount of said composition such that the pathogen is controlled.
2. The method of embodiment 1, wherein the at least one di-rhamnolipids present in the composition is at least 15% by weight, more preferably at least 20% by weight, more preferably at least 30% by weight, more preferably at least 40% by weight, more preferably at least 50% by weight, more preferably at least 60% by weight, more preferably at least 70 % by weight, more preferably at least 80 % by weight, more preferably at least 90 % by weight, based on the total weight of all rhamnolipids present in the composition.
3. The method of embodiment 1 or 2, wherein the composition comprises less than 20 % by weight, such as less than 10% by weight, preferably less than 5% by weight, more preferably less than 2% by weight, more preferably less than 1% by weight, preferably no, mono-rhamnolipids, based on the total weight of all rhamnolipids present in the composition.
4. The method of embodiments 1 to 3, wherein the composition comprises less than 80% by weight, such as less than 70% by weight, such as less than 60%, preferably less than 50% by weight, more preferably less than 40% by weight, more preferably less than 30% by weight, more preferably less than 20% by weight, more preferably less 10% by weight, more preferably less than 5% by weight, C10-C10 di-rhamnolipid, based on the total weight of all rhamnolipids.
5. The method of any one of embodiments 1 to 4, wherein the composition comprises less than 20% by weight, such as less than 10% by weight, preferably less than 5% by weight, such as less than 3% by weight, such as less than 2% by weight, C10-C8 di-rhamnolipid, based on the total weight of all rhamnolipids.
6. The method of any one of embodiments 1 to 5, wherein the composition comprises at least one mono-rhamnolipid, wherein the weight ratio of all di-rhamnolipids present in the composition to all mono-rhamnolipids present in the composition is greater than 6:4, such as greater than 9:1, such as greater than 95:5.
7. The method of any one of claims 1 to 6, wherein the composition comprises the C10-C12 di-rhamnolipid in an amount in the range of from 10 to 25% by weight, preferably in the range of from 15 to 20% by weight.
8. The method of any one of embodiments 1 to 7, wherein the composition comprises the C10-C12:1 di-rhamnolipid in an amount in the range of from 5 to 25% by weight, preferably in an amount in the range of from 10 to 25% by weight, more preferably in the range of from 11 to 15% by weight.
9. The method of any one of embodiments 1 to 8, wherein the composition comprises the C10-C12 di-rhamnolipid in an amount in the range of from 15 to 20% by weight and the C10-C12:1 di-rhamnolipid in an amount in the range of from 11 to 15% by weight.
10. The method of any one of embodiments 1 to 9, wherein the composition comprises 50 to 85% by weight, preferably 50 to 83% by weight, more preferably less than 55 to 75% by weight, more preferably 55 to 73% by weight, more preferably less than 60 to 70% by weight, more preferably less 60 to 68% by weight, more preferably 60 to 65% by weight, C10-C10 di-rhamnolipid, based on the total weight of all rhamnolipids.
11. The method of any one of embodiments 1 to 10, wherein the composition comprises less than 10% by weight, preferably 0-7% by weight, such as 2 to 6 % by weight, C10-C8 di-rhamnolipid, based on the total weight of all rhamnolipids.
12. The method of any one of embodiments 1 to 11, wherein the composition comprises less than 10% by weight, preferably less than 5% by weight, more preferably less than 2% by weight, such as of from 0 to 1.5 % by weight, C10-C10 mono-rhamnolipid, based on the total weight of all rhamnolipids present in the composition.
13. The method of claims 1 and 12, wherein the composition comprises 50 to 85% by weight, preferably 50 to 83% by weight, more preferably less than 55 to 75% by weight, more preferably 55 to 73% by weight, more preferably less than 60 to 70% by weight, more preferably less 60 to 68% by weight, more preferably 60 to 65% by weight, C10-C10 di-rhamnolipid, based on the total weight of all rhamnolipids.
14. The method of embodiments 1 and 13, wherein the composition comprises
   - the C10-C12 di-rhamnolipid in an amount in the range of from 10 to 25% by weight, preferably in the range of from 11 to 24% by weight, more preferably in the range of from 12 to 23% by weight, more preferably in the range of from 13 to 23% by weight, preferably in the range of from 14 to 21% by weight and even preferably in the range of from 15 to 20% by weight
   - the C10-C12:1 di-rhamnolipid in an amount in the range of from 5 to 25% by weight and the C10-C12:1 di-rhamnolipid in an amount in the range of from 10 to 25% by weight, preferably in the range of from 11 to 15% by weight,
   - less than 60 to 70% by weight, more preferably less 60 to 68% by weight, more preferably 60 to 65% by weight, C10-C10 di-rhamnolipid, based on the total weight of all rhamnolipids.
   - less than 10% by weight, preferably 0-7% by weight, such as 2 to 6 % by weight, C10-C8 di-rhamnolipid, based on the total weight of all rhamnolipid,
   - less than 10% by weight, preferably less than 5% by weight, more preferably less than 2% by weight, such as of from 0 to 1.5 % by weight, C10-C10 mono-rhamnolipid, based on the total weight of all rhamnolipids present in the composition.
15. The method of any one of embodiments 1 to 6, wherein the composition comprises the C10-C12 di-rhamnolipid in an amount of at least 15% by weight and less than 10 % mono-rhamnolipids, calculated as sum of all mono-rhamnolipids present in the composition.
16. The method of any one of embodiments 1 to 6, wherein the composition comprises the C10-C12:1 di-rhamnolipid in an amount of at least 15% by weight and less than 10 % mono-rhamnolipids, calculated as sum of all mono-rhamnolipids present in the composition.
17. The method of any one of embodiments 1 to 6, wherein the composition comprises
   - a C10-C12 di-rhamnolipid, the composition comprises at least 20% by weight, such as at least 30% or at least 40% by weight of C10-C12 di-rhamnolipids, based on the total weight of all rhamnolipids present in the composition
   - a C10-C12:1 di-rhamnolipid, the composition comprises at least 15% by weight, such as at least 20% by weight, such as at least 30% of C10-C12:1 di-rhamnolipids, based on the total weight of all rhamnolipid present in the composition.
18. A method for pathogen control, comprising
   providing a composition comprising a mono-rhamnolipid and di-rhamnolipid mixture, wherein the mono-rhamnolipid and di-rhamnolipid mixture has a weight ratio of di-rhamnolipids to mono-rhamnolipids of greater than 90:10, such as of greater than 95:5 or greater than 97:3, and
   contacting a plant with an effective amount of said composition such that the pathogen is controlled.
19. The method of embodiment 17, wherein the composition comprises less than 10% by weight, preferably less than 5% by weight, more preferably less than 2% by weight, more preferably less than 1% by weight, preferably no, mono-rhamnolipids, based on the total weight of all rhamnolipids present in the composition.
20. The method of embodiment 18, wherein the composition comprises di-rhamnolipids in an amount of at least 15% by weight, more preferably at least 20% by weight, more preferably at least 30% by weight, more preferably at least 40% by weight, more preferably at least 50% by weight, more preferably at least 60% by weight, more preferably at least 70 % by weight, more preferably at least 80% by weight, more preferably at least 90% by weight, calculated as the sum of all di-rhamnolipids present in the composition and based on the total weight of all rhamnolipids present in the composition.
21. The method of any one of embodiments 1 to 19, wherein the plant is a monocot or dicot.
22. The method of any one of embodiments 1 to 20, wherein the plant is a sugar beet plant.
23. The method of embodiment 21, wherein the sugar beet plant a sugar beet plant selected from the following varieties: Annarosa, Danicia,
24. The method of any one of embodiments 1 to 22, wherein said plant pathogen is a nematode, an insect, a bacterium, a fungus, or an oomycete, and/or a virus.
25. The method of embodiments 12, wherein the pathogen is a nematode.
26. The method of embodiment 24, wherein said nematode belongs to the genus *Heterodera, for example,* wherein the nematode is selected from *Heterodera schachtii. Heterodera glycines, Heterodera sacchari, Heterodera avenae, Heterodera latipons, Heterodera filipjevi,* and *Heterodera zea.*
27. The method of any one of embodiment 25, wherein said plant is contacted with said composition by watering or by soil application or spraying the plant with said composition.
28. The method of any one of embodiment 26, wherein said plant is contacted with said composition at least once.
29. A plant seed coated with a composition as defined in any one of embodiments 1 to 19.

### Figures

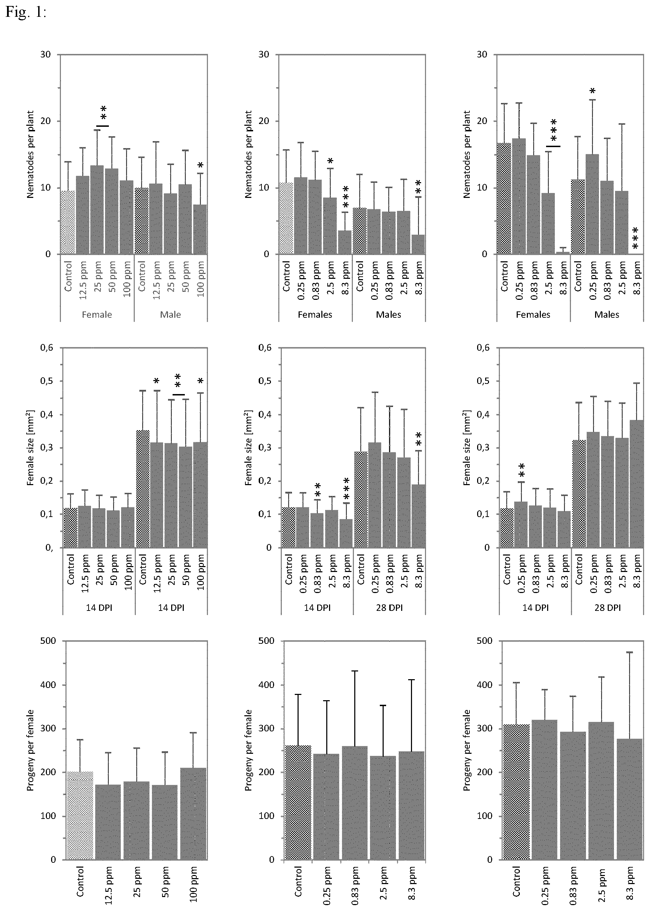

**Figure 1****:** Impact of a crude mono-rhamnolipid mixture at different concentrations (ppm) on the infection process of *H. schachtii* on *A. thaliana* including the number of adult nematodes at 14 DPI (top row), the size of females at 14 and 28 DPI (middle row), and progeny per female at 35 DPI (bottom row). **Left column:** Infection after incubation of infective juveniles for 48 hours prior to inoculation; **middle column:** Infection after plant incubation of four days old plants for four days, two days prior to inoculation; **right column:** infection in the presence of crude mono-rhamnolipids. Mean+SD of three biological replicates with total n≥24 plants, significance to the respective control asterisked: *0.05>p>0.01, ** 0.1>p>0.001, ***0.001>p.

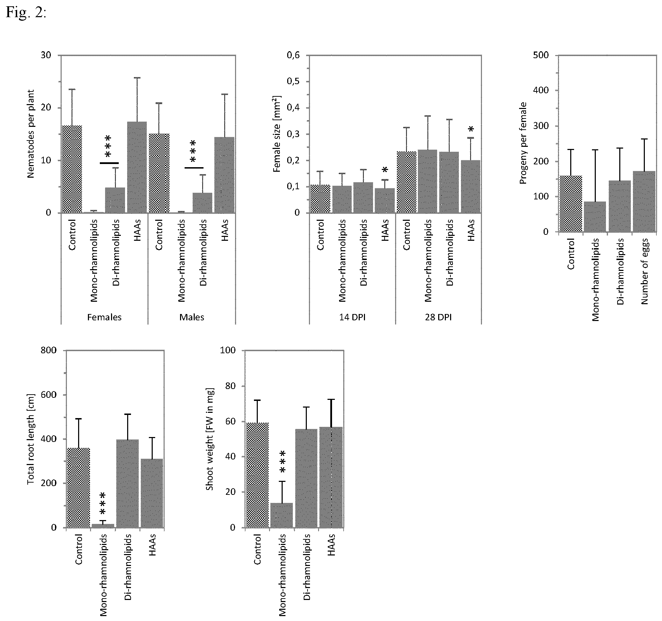

**Figure 2****:** Impact of rhamnolipid derivative mixtures as 8.3 ppm medium supplement on the plant and infection phenotype of *A. thaliana* with *H. schachtii* including the total root length (cm) and shoot fresh weight (mg) both at 14 DPI for the plant phenotype (bottom row), and the number of adult nematodes at 14 DPI, the size of females at 14 and 28 DPI, and progeny per female at 35 DPI (top row) for the infection phenotype. Mean+SD of three biological replicates with n=34 plants for the plant phenotype and n=70 plants for the infection phenotype, significance to the respective control asterisked: *0.05>p>0.01, ** 0.1>p>0.001, ***0.001>p.

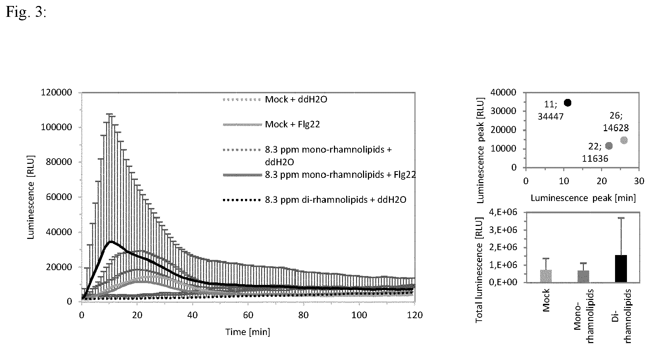

**Figure 3****:** Leaf ROS response to _{dd}H₂O and Flg22 four days after a four days treatment with 8.3 ppm monoor di-rhamnolipids, a) ROS pattern over two hours; b) ROS peak in terms of time and quantity; c) total ROS over two hours. Mean+SD of three biological replicates with n≥9, no significant difference in total luminescence.

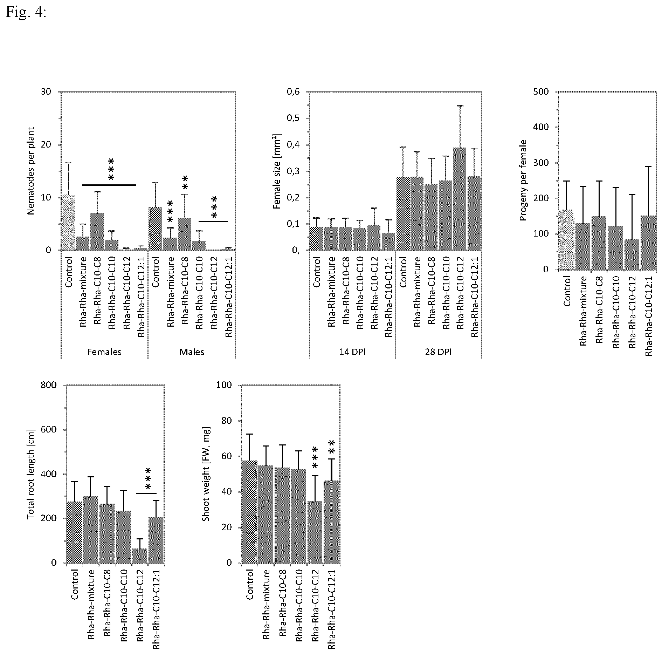

**Figure 4****:** Impact of di-rhamnolipid congeners as 8.3 ppm medium supplement on the plant and infection phenotype of *A. thaliana* with *H*. *schachtii,* including the total root length (cm) and shoot fresh weight (mg) both at 14 DPI for the plant phenotype (bottom row), and the number of adult nematodes at 14 DPI, the size of females at 14 and 28 DPI, and progeny per female at 35 DPI (top row) for the infection phenotype. Mean+SD of three biological replicates with n=32 plants for the plant phenotype and n=66 plants for the infection phenotype, significance to the respective control asterisked: *0.05>p>0.01, ** 0.1>p>0.001, *** 0.001>p.

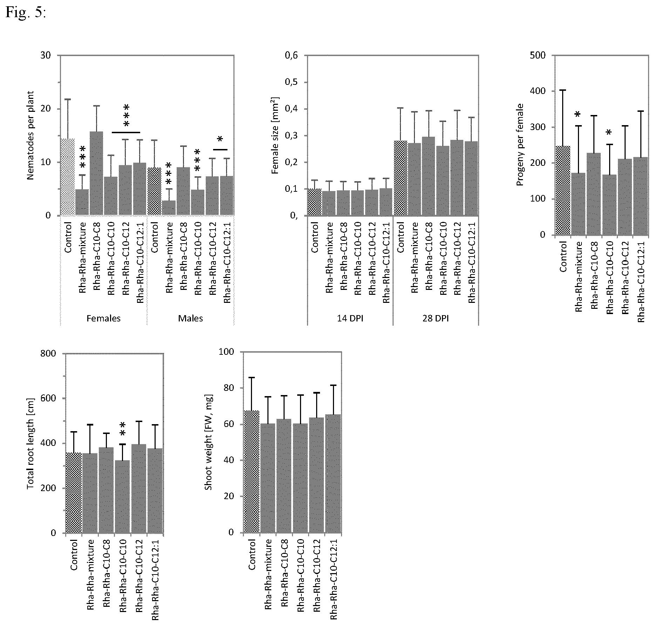

**Figure 5****:** Impact of di-rhamnolipid congeners in their relative percentage in a natural di-rhamnolipid mixture at 8.3 ppm medium supplement (0.4 ppm Rha-Rha-C10-C8, 5.1 ppm Rha-Rha-C10-C10, 1.6 ppm Rha-Rha-C10-C12, and 1.2 ppm Rha-Rha-C10-C12:1) on the plant and infection phenotype of *A*. *thaliana* with *H. schachtii,* including the total root length (cm) and shoot fresh weight (mg) both at 14 DPI for the plant phenotype (bottom row), and the number of adult nematodes at 14 DPI, the size of females at 14 and 28 DPI, and progeny per female at 35 DPI (top row) for the infection phenotype. Mean+SD of three biological replicates with n≥32 plants for the plant phenotype and n≥64 plants for the infection phenotype, significance to the respective control asterisked: *0.05>p>0.01, ** 0.1>p>0.001, ***0.001>p.

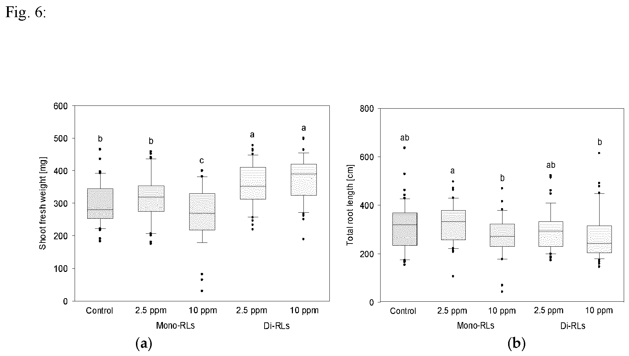

**Figure 6****:.** Plant phenotype of sugar beet variety ZR07088 in sterile Knop agar supplemented with mono-RLs or di-RLs, median with 25%- and 75%- quartile of 4 biological replicates with total n≥39: (a) Shoot fresh weight per plant, significance based on One Way ANOVA with post-hoc SNK, different letter indicate significant differences between treatments (p < 0.05); **(b)** Total root length per plant; significance based on ANOVA on ranks with post-hoc Dunn's method, different letter indicate significant differences between treatments (p < 0.05).

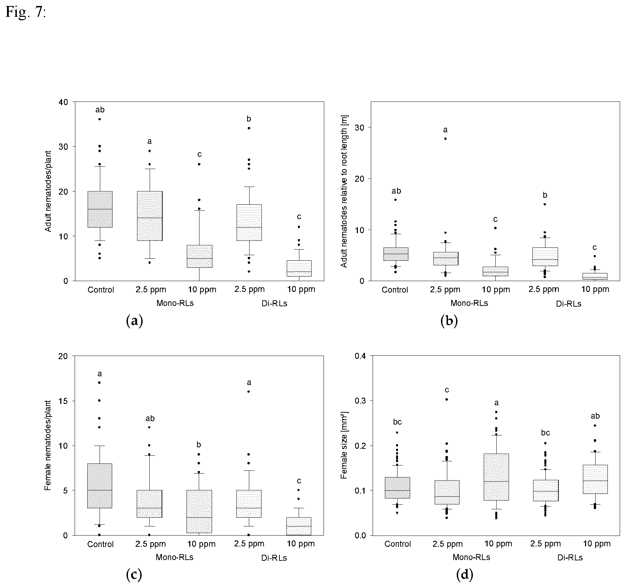

**Figure 7****.** Infection phenotype of *H. schachtii* on the susceptible sugar beet variety ZR07088 in sterile Knop agar supplemented with mono-RLs or di-RLs, median with 25%- and 75%- quartile of 4 biological replicates with n≥39, significance based on ANOVA on ranks and post-hoc Dunn's method, different letter indicate significant differences between treatments (p < 0.05): **(a)** Adult nematodes per plant; **(b)** adult nematodes per meter root; (c) Female nematodes per plant; (d) Female size in mm².

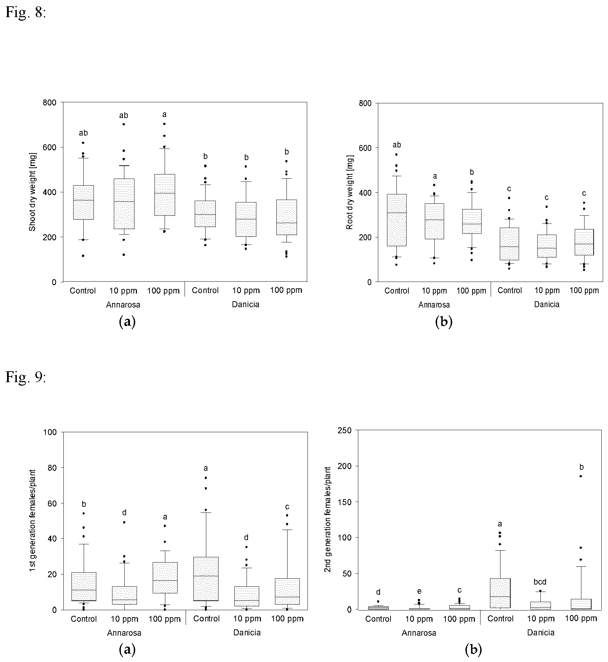

**Figure 8****.** Plant phenotype of the sugar beet varieties 'Annarosa' and 'Danicia' after soil application of di-RLs, median with 25%- and 75%- quartile of 3 biological replicates with total n≥34; significance based on ANOVA on ranks with post-hoc Dunn's method, different letter indicate significant differences between treatments (p < 0.05): **(a)** Shoot dry weight per plant, **(b)** Root dry weight per plant.
**Figure 9****.** Infection phenotype of *H. schachtii* on the sugar beet varieties 'Annarosa' and 'Danicia' after soil application of di-RLs, median with 25%- and 75%- quartile of 3 biological replicates with total n≥34; significance based on ANOVA on ranks with post-hoc SNK, different letter indicate significant differences between treatments (p < 0.05): **(a)** First generation of females post inoculation per plant, **(b)** Second generation of females post inoculation per plant.

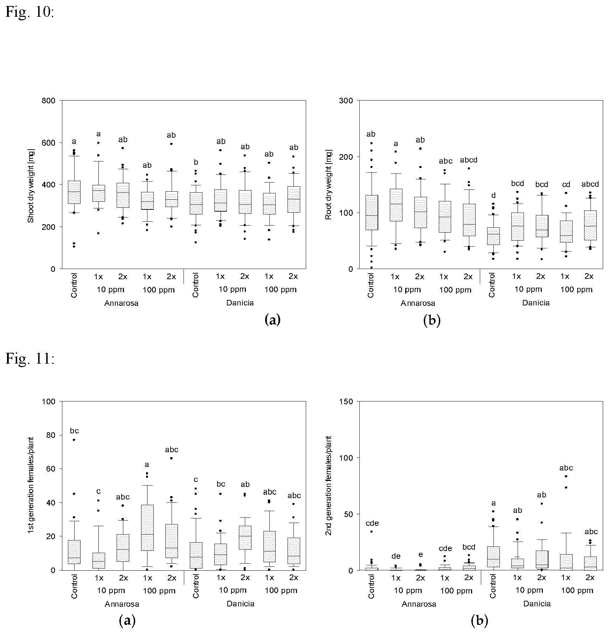

**Figure 10****.** Plant phenotype of the sugar beet varieties 'Annarosa' and 'Danicia' after one (1x) or two (2x) foliar application(s) of di-RLs, median with 25%- and 75%- quartile of 4 biological replicates with total n≥28; significance based on ANOVA on ranks with post-hoc Dunn's method, different letter indicate significant differences between treatments (p < 0.05): **(a)** Shoot dry weight per plant, **(b)** Root dry weight per plant.
**Figure 11****.** Infection phenotype of *H. schachtii* of the sugar beet varieties 'Annarosa' and 'Danicia' after one (1x) or two (2x) foliar application(s) of di-RLs, median with 25%- and 75%- quartile of 4 biological replicates with total n≥28; significance based on ANOVA on ranks with post-hoc Dunn's method, different letter indicate significant differences between treatments (p < 0.05): **(a)** First generation of females post inoculation per plant, **(b)** Second generation of females post inoculation per plant.

### Examples

### 1. In vitro capability of Rhamnolipids to protect plants from H. schachtii

### 1.1 Rhamnolipids

Mono- and di-RLs were produced by the recombinant strain *P. putida* KT2440 using the *rhl-gene* set originating from *P. aeruginosa.* The respective RLs were a mixture with variation in the chain length of the β-hydroxy fatty acids.

Mono-RLs used in axenic experiments comprised about 66% Rha-C10-C10, 22% Rha-C10-C12:1, 7% Rha-C10-C12, and 4% C10-C10.

Di-RLs used in axenic experiments and in greenhouse trials comprised about 5% Rha-Rha-C10-C8, 60% Rha-Rha-C10-C10, 13% Rha-Rha-C10-C12: 1,19% Rha-Rha-C10-C12, and 1% C10-C10 and Rha-C10-C10 each.

### 1.2 Bacterial strains, culture conditions, and plasmids

The used bacterial strains *P. putida* KT2440 [1,2] and *E. coli* DH5α [4] were routinely cultivated in LB medium (10 g/L tryptone, 5 g/L yeast extract, 10 g/L NaCl). *E. coli* was cultivated at 37°C, while *P. putida* was grown at 30°C. Bacteria containing derivatives of vector pBBR1 were selected by adding 10 µg/mL tetracycline to LB-agar and liquid cultures. For selecting pSEVA241 derivatives kanamycin with a concentration of 50 µg/mL was added.

### 1.3 Construction of plasmids

Plasmid pPS05 (for mono-rhamnolipid production) was previously constructed [5]. pWJ02 (for di-rhamnolipid synthesis) is a derivative of pPS05. The additional Gen *rhlC* was taken from a previously constructed plasmid carrying only *rhlC* (pVLT33_*rhlC*)*.* Using PCR primers PS 13 and PS 14 *rhlC* was amplified and placed under the control of the synthetic promoter no. 16 (SynPro16) and an artificial RBS. With restriction enzyme AscI the fragment and the plasmid pPS05 were cut and subsequently ligated.

pSB01 (for HAA production) was constructed by amplifying *rhlA* from a plasmid previously constructed that was already equipped with the engineered RBS and the synthetic promoter no. 8 (SynPro8). As a backbone, pSEVA241 was used. Both vector and fragment were cut with restriction enzymes KpnI and SphI and subsequently ligated.

### 1.4 Biosurfactant production

Biosurfactant production with recombinant pseudomonads was carried out using LB medium complemented with 10 g/L glucose and the respective antibiotic in Fernbach shake flasks filled with 500 mL LB medium, 10 g/L glucose, and the respective antibiotic (as described above). Flasks were cultivated in a Multitron shaker by Infors AG (Bottmingen, Switzerland) at 50 mm shaking diameter and 200 rpm. Glucose was added when its concentration fell below 1 g/L (at 38, 52, 91, and 140 h).

### 1.5 Biosurfactant quantification

Cells and cell residues were separated by centrifugation at 13,000 x g for 2 min. 500 µL of the supernatant were then mixed with 500 µL of acetonitrile and vortexed. Subsequently, samples were incubated overnight at 4°C to facilitate precipitation of any residual material that might clog the column. The next day, the samples were centrifuged again and the supernatant was filtered with a Phenex-RC (regenerated cellulose) syringe filter (diameter 4 mm, pore size 0.2 µm) (Phenomenex, Aschaffenburg, Germany).

Samples were analyzed on an UltiMate3000 series HPLC. The system is composed of the pump LPG-3400SD, the autosampler WPS-3000 (RS), and the column oven TCC-3000 (RS), with a Corona CAD detector (all Thermo Fisher Scientific Inc., Waltham, MA, USA). The CAD was supplied with a continuous nitrogen stream by the nitrogen generator Parker Balston NitroVap-1LV (Parker Hannifin GmbH, Kaarst, Germany).

For separation of rhamnolipid species and derivatives, a NUCLEODUR C18 Gravity column from Macherey-Nagel GmbH & Co. KG (Düren, Germany) with a particle size of 3 µm in the dimensions of 150 x 4.6 mm was used. This column was protected by a guard column (4 x 4.6 mm, particle size 3 µm). The gradient started with 70% of acetonitrile and 30% purified water containing 0.2% formic acid. After 1 minute, acetonitrile was increased to 100% within 8 min. After 11 min total analysis time, acetonitrile was decreased to 70% during 1 min. The total analysis time was 15 min. The column oven temperature was set to 40°C, and the injection volume to 5 µL. The flow rate was 1 mL/min.

### 1.6 Identification of rhamnolipid congeners

Verification of the chromatographic peak assignments of the RP-HPLC-CAD method was carried out by HPLC coupled to tandem mass spectrometry (LC-MS/MS) as described in [8]. Briefly, an Alliance 2695 separations module coupled to a Micromass Quattro micro triple quadrupole mass spectrometer (both Waters Corporation, Milford, MA, USA) was used. Full scan mass spectrometric detection in the range *m*/*z* 100-1000 was carried out in ESI-negative mode. Structural information was provided by additional MS/MS experiments (product ion scans).

### 1.7 Biosurfactant purification

The cells were first separated from the culture broth by centrifugation at 13,000 rpm for 10 min in a Sorvall RC 5B Plus centrifuge from Thermo Fisher Scientific Inc. (Waltham, MA, USA) using 250 mL steel bottles. Subsequently, the supernatant was mixed with acetone at a ratio of 1:1 to precipitate remaining dissolved proteins. After stirring the mixture for about one hour, the whole broth was again centrifuged under the same conditions. Afterwards the acetone was evaporated (in a water bath at 75°C and under a constant flow of compressed air). When the acetone was completely evaporated, a final centrifugation step was performed (at the same conditions as stated above). The supernatant was then filtered using a Supor^{®}-200 0.2 µm, 142 mm filter from Pall (Ann Arbor, MI, USA). Finally, the pH of the filtrate was increased to 10 with a 2 M NaOH solution.

The prepared supernatant was pumped onto an LC glass column with a length of 64 cm and an inner diameter of 2.44 cm (LATEK Labortechnik-Geräte GmbH, Eppelheim, Germany). The bed consisted of Europrep II 60-60 C18H from Knauer (Berlin, Germany) with a height of 20 cm. The used pump was a System Gold 125 Solvent Module from Beckmann Coulter (Krefeld, Germany). The column was primed with ethanol for about 15 min with 2-6 bed volumes per hour (according to Küpper *et al.* [9]) and afterwards washed with water at a pH of 10. The filtrate was pumped onto the column with a flow rate of 2-5 mL/min. Next, the column was again flushed with water (until no more color was eluted from the column). To elute the biosurfactants an ethanol gradient with the following program was used: 30 min 30% EtOH, 30 min 50% EtOH, 30 min 75% EtOH, 10 min 95% EtOH, 30 min 100% EtOH. The flow rate was set to 0.5 bed volumes per hour. During the elution, the eluate was collected in fractions, each with 0.1 bed volumes. The biosurfactant concentrations were measured via HPLC-CAD as stated above. Finally, the column was again flushed with water (neutral pH). Purification of rhamnolipids by adsorption/desorption has already been shown [10].

The pH of each fraction was measured and increased to 10, if necessary. Subsequently, the solvents were evaporated in the rotary dryer SCANSPEED Scan Speed 40 connected to the SCANVAC Cooling Trap (LaboGene, Lynge, Denmark) and the Chemistry Hybrid Pump RC 6 by VACUUBRAND GmbH (Wertheim, Germany). The purity of each fraction was determined by weighing the solid residue and HPLC-CAD measurements.

### References:

1. Nelson KE, Weinel C, Paulsen IT, Dodson RJ, Hilbert H, Martins dos Santos VAP, Fouts DE, Gill SR, Pop M, Holmes M, Brinkac L, Beanan M, DeBoy RT, Daugherty S, Kolonay J, Madupu R, Nelson W, White O, Peterson J, Khouri H, Hance I, Lee PC, Holtzapple E, Scanlan D, Tran K, Moazzez A, Utterback T, Rizzo M, Lee K, Kosack D, Moestl D, Wedler H, Lauber J, Stjepandic D, Hoheisel J, Straetz M, Heim S, Kiewitz C, Eisen J, Timmis KN, Düsterhöft A, Tümmler B, and Fraser CM. Complete genome sequence and comparative analysis of the metabolically versatile Pseudomonas putida KT2440. Environ Microbiol, 2002. 4(12): 799-808.
2. Ramos-Diaz MA and Ramos JL. Combined physical and genetic map of the Pseudomonas putida KT2440 chromosome. J Bac, 1998. 180(23): 6352-6363.
3. Panke S, Witholt B, Schmid A, and Wubbolts MG. Towards a biocatalyst for (S)-styrene oxide production: Characterization of the styrene degradation pathway of Pseudomonas sp. strain VLB120. Appl Environ Microbiol, 1998. 64(6): 2032-2043.
4. Hanahan D. Studies on transformation of Escherichia coli with plasmids. J Mol Biol, 1983. 166(4): 557-580.
5. Tiso T, Sabelhaus P, Behrens B, Wittgens A, Rosenau F, Hayen H, and Blank LM. Creating metabolic demand as an engineering strategy in Pseudomonas putida - Rhamnolipid synthesis as an example. Metab Eng Commun, 2016. 3: 234-244.
6. Wittgens A, Kovacic F, Müller MM, Gerlitzki M, Santiago-Schiibel B, Hofmann D, Tiso T, Blank LM, Henkel M, Hausmann R, Syldatk C, Wilhelm S, and Rosenau F. Novel insights into biosynthesis and uptake of rhamnolipids and their precursors. Appl Microbiol Biotechnol, 2017(101): 2865-2878.
7. Behrens B, Baune M, Jungkeit J, Tiso T, Blank LM, and Hayen H. High performance liquid chromatography-charged aerosol detection applying an inverse gradient for quantification of rhamnolipid biosurfactants. J Chromatogr A, 2016. 1455: 125-132.
8. Behrens B, Engelen J, Tiso T, Blank LM, and Hayen H. Characterization of rhamnolipids by liquid chromatography/mass spectrometry after solid-phase extraction. Anal Bioanal Chem, 2016. 408(10): 2505-2514.
9. Küpper B, Mause A, Halka L, ImhoffA, Nowacki C, and Wichmann R. Fermentative Produktion von Monorhamnolipiden im Pilotmaßstab - Herausforderungen der Maßstabsvergrößerung. Chem Ing Tech, 2013. 85: 834-840.
10. Siemann-Herzberg M and Wagner F, Prospects and limits for the production of biosurfactants using immobilized biocatalysts, in Biosurfactants, N. Kosaric, Editor. 1993, Marcel Dekker Inc.: New York.

### 2. In vivo capability of Rhamnolipids to protect Sugar Beet from H. schachtii

### 2.1 Rhamnolipids

Mono- and di-RLs were produced by the recombinant strain *P. putida* KT2440 using the *rhl-gene* set originating from P. aeruginosa. The respective RLs were a mixture with variation in the chain length of the β-hydroxy fatty acids. Mono-RLs used in axenic experiments comprised about 66% Rha-C10-C10, 22% Rha-C10-C12:1, 7% Rha-C10-C12, and 4% C10-C10. Di-RLs used in axenic experiments and in greenhouse trials comprised about 5% Rha-Rha-C10-C8, 60% Rha-Rha-C10-C10, 13% Rha-Rha-C10-C12:1, 19% Rha-Rha-C10-C12, and 1% C10-C10 and Rha-C10-C10 each.

### 2.2 Axenic plant growth and treatment (sterile conditions)

A sugar beet variety (Saatgut für Anbauversuche Partie Nr.: ZR07088, KWS SAAT SE &Co KgaA, Einbeck, Germany) was chosen based on its susceptibility to *H. schachtii.* Seed sterilization of uncoated material included 3 min soaking in 60% ethanol followed by 10 min recovery in sterile double distilled water, and 3 hours in 6% sodium hypochlorite dosed with polysorbate 20 (3 µl per 10 ml sodium hypochlorite) on a rotary shaker at 23 rpm (Three-Dimensional Shaker TL-10, Edmund Bühler GmbH). Afterwards, the seeds were washed 5 times with sterile double distilled water on a rotary shaker at 23 rpm, initially for 10 min followed by 4 times 5 min. After 7 days on water agar (1.5 % agar agar, Kobe I), the germlings were transferred onto Knop agar [Borah, S.N.; Goswami, D.; Sarma, H.K.; Cameotra, S.S.; Deka, S. Rhamnolipid biosurfactant against Fusarium verticillioides to control stalk and ear rot disease of maize. Front. Microbiol. 2016, 7, 1-10, doi:10.3389/fmicb.2016.01505] supplemented with either mono- or di-RLs to grow at RT and 16/8 photoperiod. About 200 sterile second-stage juveniles (J2s) were inoculated along the primary root 3 weeks after sowing. The success of infection was determined based on the number of adult nematodes 12 days post inoculation (dpi), the size of females and female-associated syncytia 15 dpi, and relative to the plant phenotype 20 dpi. Parameters including root and shoot characteristics were included in plant phenotyping to study a general effect of the RL treatment on plant development. An evaluation of the number of nematodes in relation to root growth averts a false interpretation of quantitative changes in the infestation related to differing root phenotypes.

### 2.3 Plant growth and treatment in greenhouse trial (non-sterile conditions)

Autoclaved sand was transferred into collapsible plastic boxes (100 ml volume) sparing the upper one centimeter. Per box two seeds of the respective variety were sown into pre-formed wells of half a centimeter depth. One week after sowing, one plant of the box was removed to promote uniform plant development. An optimal plant development was supported by fertilizing plants with Osmocote 3-4M (3g/kg substrate). The growth conditions were standardized to a 12/12 photoperiod with 20°C at day and 16°C at night time and a humidity of 60-70%. Plants were watered as required to enable a constant water supply but avoiding waterlogging. In the greenhouse trials, the treatment was performed either as soil or as foliar application with 10 ppm or 100 ppm di-RLs. For the soil application, 10 ml of the respective solution (sterile water for control, 0.1 mg or 1 mg di-RLs per plant in total) was added directly to the soil of four weeks old plants as part of the general watering. Foliar application was postponed by ten days to ensure an overall full expansion of the first leaf pair among the sugar beet varieties. Leaves were temporarily isolated to prevent from splashes onto adjacent leaves and each leaf pair was sprayed 4-5 times with the respective solution (sterile water for control, 4-5 µg or 40-50 µg di-RLs per plant in total) in a spray bottle (spray bottle with atomiser, Carl Roth GmbH & Co. Kg). After two days, the spraying was repeated for half of the plants and each plant was inoculated with sterile *H. schachtii* J2s by pipetting 1 ml sterile water containing 500 nematodes into a pre-formed well of 1 cm depth next to the hypocotyl. After further 12 weeks, shoots were harvested and the boxes were covered for another 6 weeks until roots were washed for infection evaluation. Both, the sieved soil (collected with a final mesh size 25 µm) and plants were analyzed for cysts and young females which were defined as first and second female generation.

### 2.4 Statistics

Statistical analysis and graphs were compiled with SigmaPlot (Version 12.5, Systat Software GmbH). The significance of normalized data was calculated based on One Way ANOVA and in the case of a non-normal distribution based on ANOVA on ranks. The Student Newman-Keuls (SNK) method was the post-hoc analysis of choice for experiments with an equal number of technical replicates while Dunn's method was used for an unequal number among variants.

## Claims

1. A method for pathogen control, comprising
providing a composition comprising at least one di-rhamnolipid, wherein the di-rhamnolipid is a C10-C12 di-rhamnolipid, or a C10-C12:1 di-rhamnolipid, or a combination thereof, wherein the amount of the at least one di-rhamnolipid present in the composition is at least 10% by weight, based on the total weight of all rhamnolipids present in the composition, and
contacting a plant with an effective amount of said composition such that the pathogen is controlled.

2. The method of claim 1 or 2, wherein the composition comprises less than 20 % by weight, such as less than 10% by weight, preferably less than 5% by weight, more preferably less than 2% by weight, more preferably less than 1% by weight, preferably no, mono-rhamnolipids, based on the total weight of all rhamnolipids present in the composition.

3. The method of any one of claims 1 to 3, wherein the composition comprises at least one mono-rhamnolipid, wherein the weight ratio of all di-rhamnolipids present in the composition to all mono-rhamnolipids present in the composition is greater than 6:4, such as greater than 9:1, such as greater than 95:5.

4. The method of any one of claims 1 to 3, wherein the composition comprises
- the C10-C12 di-rhamnolipid in an amount in the range of from 10 to 25% by weight, preferably in the range of from 11 to 24% by weight, more preferably in the range of from 12 to 23% by weight, more preferably in the range of from 13 to 23% by weight, preferably in the range of from 14 to 21% by weight and even preferably in the range of from 15 to 20% by weight
- the C10-C12:1 di-rhamnolipid in an amount in the range of from 5 to 25% by weight and the C10-C12:1 di-rhamnolipid in an amount in the range of from 10 to 25% by weight, preferably in the range of from 11 to 15% by weight,
- less than 60 to 70% by weight, more preferably less 60 to 68% by weight, more preferably 60 to 65% by weight, C10-C10 di-rhamnolipid, based on the total weight of all rhamnolipids.
- less than 10% by weight, preferably 0-7% by weight, such as 2 to 6 % by weight, C10-C8 di-rhamnolipid, based on the total weight of all rhamnolipid,
- less than 10% by weight, preferably less than 5% by weight, more preferably less than 2% by weight, such as of from 0 to 1.5 % by weight, C10-C10 mono-rhamnolipid, based on the total weight of all rhamnolipids present in the composition.

5. The method of any any one of claims 1 to 3, wherein the composition comprises the C10-C12 di-rhamnolipid in an amount of at least 15% by weight and less than 10 % mono-rhamnolipids, calculated as sum of all mono-rhamnolipids present in the composition.

6. The method of any one of claims 1 to 3, wherein the composition comprises the C10-C12:1 di-rhamnolipid in an amount of at least 15% by weight and less than 10 % mono-rhamnolipids, calculated as sum of all mono-rhamnolipids present in the composition.

7. The method of any one of claims 1 to 3, wherein the composition comprises
- a C10-C12 di-rhamnolipid, the composition comprises at least 20% by weight, such as at least 30% or at least 40% by weight of C10-C12 di-rhamnolipids, based on the total weight of all rhamnolipids present in the composition
- a C10-C12:1 di-rhamnolipid, the composition comprises at least 15% by weight, such as at least 20% by weight, such as at least 30% of C10-C12:1 di-rhamnolipids, based on the total weight of all rhamnolipid present in the composition.

8. A method for pathogen control, comprising
providing a composition comprising a mono-rhamnolipid and di-rhamnolipid mixture, wherein the mono-rhamnolipid and di-rhamnolipid mixture has a weight ratio of di-rhamnolipids to mono-rhamnolipids of greater than 90:10, such as of greater than 95:5 or greater than 97:3, and
contacting a plant with an effective amount of said composition such that the pathogen is controlled.

9. The method of any one of claims 1 to 8, wherein the plant is a monocot or dicot.

10. The method of any one of claims 1 to 9, wherein the plant is a sugar beet plant, preferably . a sugar beet plant selected from the following varieties: Annarosa, Danicia,

11. The method of any one of claims 1 to 10, wherein said plant pathogen is a nematode, an insect, a bacterium, a fungus, or an oomycete, and/or a virus.

12. The method of claims 11, wherein the pathogen is a nematode.

13. The method of claim 12, wherein said nematode belongs to the genus *Heterodera, for example,* wherein the nematode is selected from *Heterodera schachtii. Heterodera glycines, Heterodera sacchari, Heterodera avenae, Heterodera latipons, Heterodera filipjevi,* and *Heterodera zea.*

14. The method of any one of claim 13, wherein said plant is contacted with said composition by watering or by soil application or by spraying the plant with said composition, preferably wherein said plant is contacted with said composition at least once.

15. A plant seed coated with a composition as defined in any one of claims 1 to 14.
